# EUROPEAN PATENT SPECIFICATION

(11) **EP 1 246 497 B1**
(45) Date of publication and mention of the grant of the patent: **09.06.2004**
(21) Application number: 02251910.2
(22) Date of filing: 18.03.2002
(51) Int. Cl.: H04Q 7/38, H04B 1/40

(54) **Mobile communication apparatus with transmission inhibit function**
Mobiles Kommunikationsgerät mit Sendesperrfunktion
Appareil mobile de communication avec fonction du blocage de transmission

(30) Priority: 29.03.2001 JP 2001096547
(43) Date of publication of application: 02.10.2002
(73) Proprietor: Pioneer Corporation, Meguro-ku, Tokyo (JP)
(72) Inventor: Takatori, Yuji, c/o Pioneer Corporation, Kawagoe-shi, Saitama (JP)
(74) Representative: Haley, Stephen

(56) References cited:
- EP-A- 0 880 296
- DE-C- 19 744 263
- PATENT ABSTRACTS OF JAPAN vol. 1998, no. 04, 31 March 1998 (1998-03-31) & JP 09 326725 A (HITACHI DENSHI LTD), 16 December 1997 (1997-12-16)

## Description

This invention relates to a mobile communication apparatus, such as a mobile telephone, for conducting communications using radio communications.

In recent years, communication systems using radio communications have sprung into wide use and further development in the field of mobile communications of mobile telephones, pagers, etc., for example, is expected.

By the way, a mobile telephone, a kind of mobile communication apparatus, in a related art involves the following problems.

Generally, if a communication radio wave is output from a mobile telephone, it is feared that the radio wave will adversely affect electronic machines, medical machines, etc., installed in an airplane, and therefore communications in specific locations of airplanes, hospitals, railroad vehicles, etc., are restricted.

To suppress communications in such locations where communication restriction is imposed, the user, etc., the owner of amobile telephone, shuts off the power of the mobile telephone voluntarily.

That is, it is necessary to completely suppress communications by shutting off the power of the mobile telephone as a method of reliably blocking output of radio waves from the mobile telephone.

However, recent mobile telephones have not been simple communication tools and various information processing functions have been added. Thus, if the user, etc., wants to use various functions other than communications although he or she does not conduct communications in the location where communication restriction is imposed, the user, etc., cannot use any other function than communications if the power is shut off; this is a problem.

Some mobile telephones include a function called "manner mode" as a function of making it substantially impossible for the user, etc., to conduct communications, but the "manner mode" cannot respond to the communication restriction.

This means that the "manner mode" is provided for solving the problem of phone conversation voice being offensive to others in the surroundings if a telephone conversion is made in a hospital, an airplane, a rush-hour railroad vehicle, etc. If the user, etc., sets the mobile telephone to the "manner mode" voluntarily, sounding a ringing tone (ringing melody) is inhibited even if the user, etc., is called.

Therefore, the "manner mode" is a functionof simplymaking the user, etc., unaware of being called as the mobile telephone is set so as not to sound a ringing tone, and if the mobile telephone is placed in the "manner mode, " a communication radio wave is output from the mobile telephone and the "manner mode" cannot respond to the communication restriction.

JP-A-09326725 discloses a mobile communication method and device with controller and radio communicator cooperating with a transmission prohibiting system. DE-A-19744263 discloses a communication method and device with additional functionality.

It is therefore.an object of the invention to provide a mobile communication apparatus, such as a mobile telephone, for enabling the user, etc., to use various functions other than communications even in a location where communication restriction is imposed.

To the end, according to the invention, there is provided a mobile communication apparatus comprising:
control section for performing a function in response to a command of a user;
radio communication section for conducting radio communications by transmitting a radio wave; and
transmission prohibition section for prohibiting the radio communication section from transmitting a radio wave, characterised in that:
   the control section is arranged to permit to execute a function when the transmission prohibition section prohibits the radio communication section from transmitting a radio wave;
   said control section has storage section for storing the execution result of operation executed while the transmission prohibition section prohibits the radio communication section from transmitting a radio wave, and
   the radio communication section is arranged, after the transmission prohibition section allows the radio communication section to transmit a radio wave, to transmit radio wave based on the execution result stored in the storage section.

According to the invention, if the transmission prohibition mode is set so that a communication radio wave is not sent in a location where communication restriction is imposed, it is made possible for the user, etc., to use the mobile communication apparatus of the invention by using any other function than the communication function sending a communication radio wave.

According to the invention, the transmission prohibition mode is set so that a communication radio wave is not sent in a location where communication restriction is imposed, and various functions are preset. When the transmission prohibition mode is released, the preset functions can be executed. Thus, it is made possible to improve the convenience of the user, etc.

The mobile communication apparatus of the invention may further include a display section, when transmission of a communication radio wave is prohibited, for displaying the fact that transmission of a communication radio wave is prohibited for the outside.

According to the invention, the fact that transmission of a communication radio wave is prohibited is displayed for the outside. Thus, others in the surroundings in the location where communication restriction is imposed are also enabled to recognize that the mobile communication apparatus of the invention is placed in the mode in which transmission of a communication radio wave is prohibited, and a feeling of being safe can be given to others in the surroundings, namely outsiders.

Further, according to the invention, there is provided a mobile communication method comprising the steps of:
controlling for performing a function in response to a command of a user;
radio communicating for conducting radio communications by transmitting a radio wave; and
transmission prohibiting for prohibiting the radio communicating from transmitting a radio wave, characterised in that:
   when the transmission prohibiting step prohibits the radio communicating step from transmitting a radio wave, execution of a function by the controlling step is permitted;
   the controlling step has storage step for storing the execution result of operation executed while the transmission prohibiting step prohibits the radio communicating step from transmitting a radio wave, and
   after the transmission prohibiting step allows the radio communicating step to transmit a radio wave, the radio communicating step transmits a radio wave based on the execution result stored in the storage step.

Still further, there is provided themobile communication method, further including: displaying step, when transmission of a communication radio wave is prohibited, for displaying the fact that transmission of a communication radio wave is prohibited for the outside.

**In the Drawings:**
FIGS. 1 (a) to 1 (c) are drawings to show the appearance of a mobile telephone of an embodiment of the invention;
FIG. 2 is a block diagram to show the configuration of the internal circuitry, etc., contained in the mobile telephone shown in FIG. 1; and
FIG. 3 is a flowchart to describe the operation of the mobile telephone of the embodiment of the invention.

Referring now to the accompanying drawings, there is shown a preferred embodiment of the invention. A mobile telephone will be discussed as an embodiment of a mobile communication apparatus of the invention.

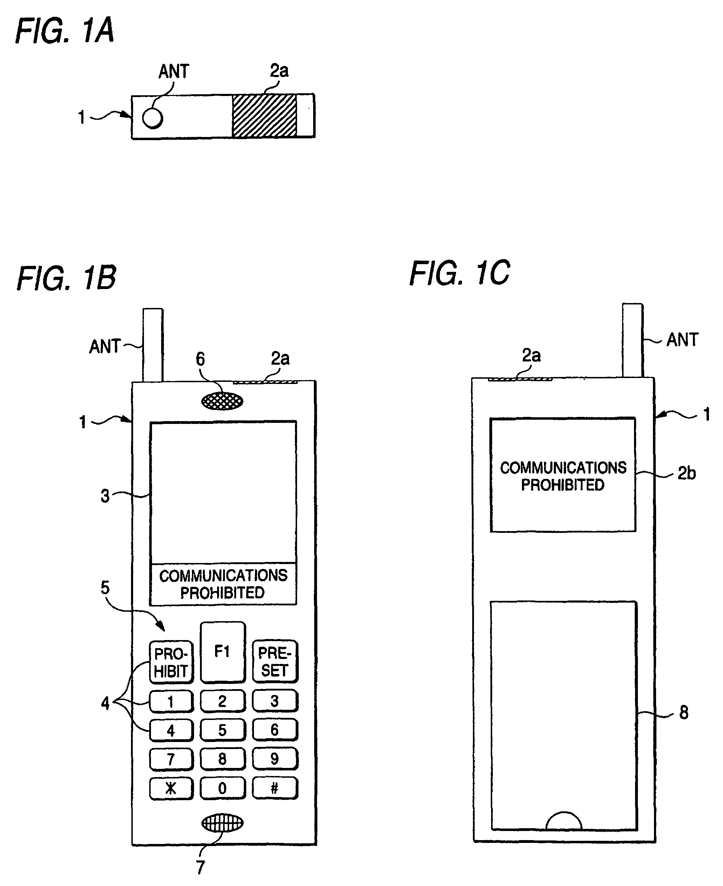

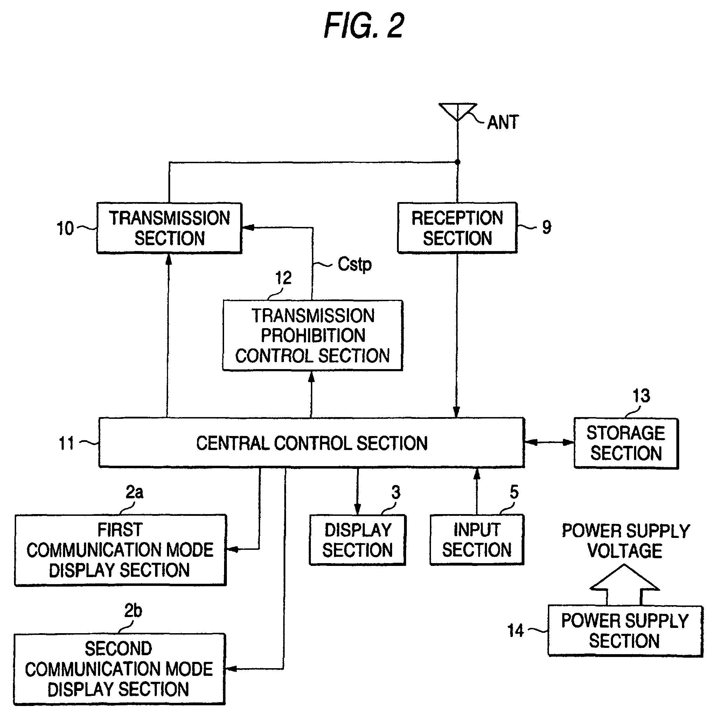

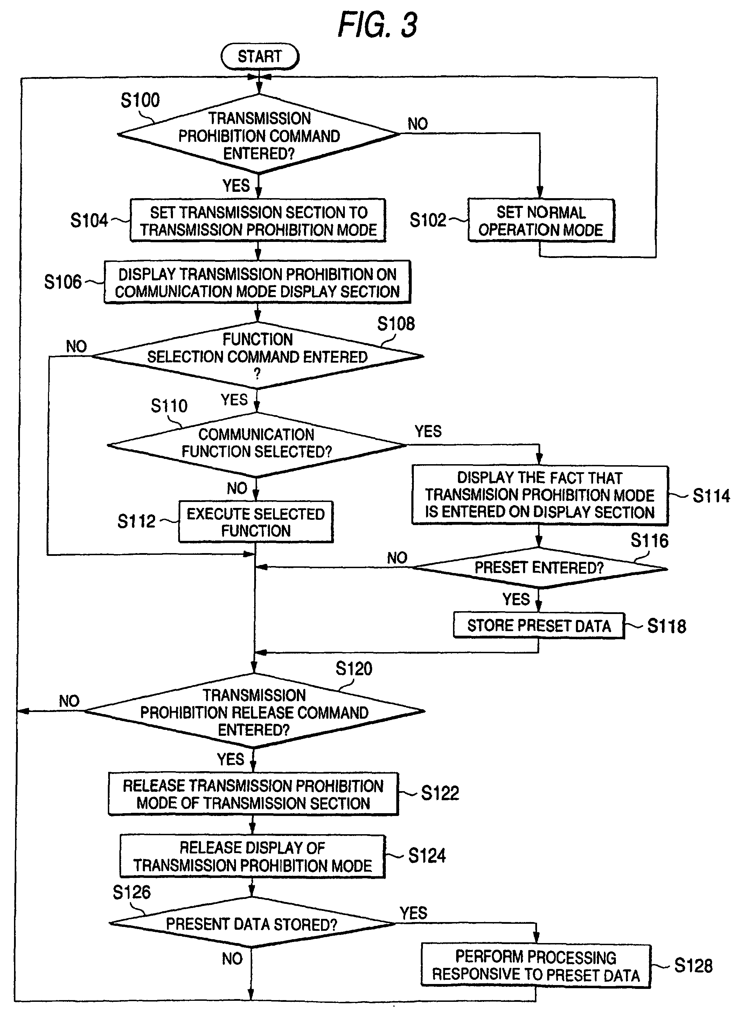

FIGS. 1 (a) to 1 (c) are drawings to show the appearance of a mobile telephone 1; FIG. 1 (a) is a side view of the mobile telephone 1, FIG. 1 (b) is a front view of the mobile telephone 1, and FIG. 1 (c) is a rear view of the mobile telephone 1. FIG. 2 is a block diagram to show the configuration of the internal circuitry, etc., contained in the mobile telephone 1. FIG. 3 is a flowchart to describe the operation of themobile telephone 1.

A transmission/reception antenna ANT for transmitting and receiving radio waves to and from base stations placed in a mobile communication network and a first communication mode display section 2a are provided on the top of a cabinet of the mobile telephone 1, as shown in FIG. 1 (a).

Adisplay section 3 implemented as a liquid crystal display, an input section 5 consisting of a plurality of operation button switches 4, and a loudspeaker 6 and a microphone 7 for performing voice reproduction and voice input in a phone conversation are provided on the front of the mobile telephone 1, as shown in FIG. 1 (b). The operation button switches 4 include function keys for the user, etc., to select various functions and input keys for the user, etc., to enter numerical data, text data, etc.

A second communication mode display section 2b and a battery storage section 8 for storing batteries for driving the mobile telephone 1 are provided on the rear of the mobile telephone 1, as shown in FIG. 1 (c).

The display section 3 displays amenu for providing various functions for the user, etc., in response to operation of the input section 5 by the user, etc., and the telephone number of the associated party, message data, etc., in communications.

If the user, etc., operates a predetermined operation button key of the input section 5 for entering a TRANSMISSION PROHIBITION command, a message indicating that the operation mode of the mobile telephone 1 is placed in TRANSMISSION PROHIBITION is displayed in a part of the display screen of the display section 3, as described later in detail.

In FIG. 2, the mobile telephone 1 contains in the cabinet a reception section 9 for converting a radio wave from a base station received through the transmission/reception antenna ANT into a reception signal, demodulating the reception signal to demodulation data, and supplying the demodulation data to a central control section 11 and a transmission section 10 for modulating transmission data supplied from the central control section 11 to a transmission signal and transmitting the signal to a base station through the transmission/reception antenna ANT.

The central control section 11, which includes a microprocessor (MPU) , performs centralized control of the whole operation of the mobile telephone 1 by executing a preset, predetermined system program and provides various functions for the user, etc., by executing preset, predetermined application programs.

Further, the reception section 9 and the transmission section 10 are connected to the central control section 11. In addition, a transmission prohibition control section 12, a storage section 13 implemented as semiconductor memory, etc., the input section 5 including the operation button switches 4, the first communication mode display section 2a, the second communication mode display section 2b, and the display section 3 are connected to the central control section 11.

The mobile telephone 1 further contains a power supply section 14 for stabilizing power from the batteries stored in the battery storage section 8 and generating a predetermined power supply voltage for operating the mobile telephone 1.

If the user, etc., operates the predetermined operation button key of the input section 5 for giving a TRANSMISSION PROHIBITION command to the central control section 11, then the central control section 11 sends the TRANSMISSION PROHIBITION command to the transmission prohibition control section 12, which then supplies a transmission control signal Cstp to the transmission section 10 for prohibiting transmission processing so as not to output a radio wave from the transmission/reception antenna ANT.

After supplying the transmission control signal Cstp to the transmission section 10 for instructing the transmission section 10 to performno transmissionprocessing, upon reception of a TRANSMISSION PROHIBITION RELEASE command from the central control section 11 as the user, etc., enters the command, the transmission prohibition control section 12 supplies a transmission control signal Cstp for releasing the TRANSMISSION PROHIBITION mode set so far to the transmission section 10 for enabling the transmission section 10 to perform transmission processing.

Upon reception of the transmission control signal Cstp as the TRANSMISSION PROHIBITION command, the transmission section 10 of the embodiment stops transmission processing on its own by shutting off supply of the power supply voltage from the power supply section 8. However, the invention is not limited to shutting off the power supply voltage. Any other means may be provided in such a manner that a changeover switch circuit for performing the switch operation so as to prohibit the transmission section 10 from outputting a transmission signal to the transmission/reception antenna ANT is provided between the transmission section 10 and the transmission/reception antenna ANT or that the operation of the transmission section 10 itself is stopped regardless of whether or not the power supply voltage from the power supply section 14 to the transmission section 10 is shut off.

The first and second communication mode display sections 2a and 2b, which are controlled by the central control section 11, are turned on while the transmission section 10 is placed in the TRANSMISSION PROHIBITIONmodeby the transmission control signal Cstp, and are turned off while the transmission section 10 is placed in a transmission enable mode.

The first communication mode display section 2a is formed of an electroluminescence element such as a high-intensity light emitting diode. It is formed of a color electroluminescence element capable of emitting light of various colors of red, green, white, etc. Thus, the first communication mode display section 2a emits high-intensity light for informing the user that the transmission section 10 is placed in the TRANSMISSION PROHIBITION mode, and also enables others in the surroundings to easily visually recognize the condition.

The second communicationmode display section 2b is formed of an electroluminescence element having a large light emission area as compared with the first communication mode display section 2a, such as an organic EL element for performing planar light emitting. It can display various background colors of red, green, white, etc., and text, a picture, etc., at a high contrast to the background color.

For example, as illustrated in FIG. 1 (c), while the transmission section 10 is placed in the TRANSMISSION PROHIBITION mode, white light is emitted in the background portion of the display screen of the first communication mode display section 2a and a message of COMMUNICATIONS PROHIBITED is displayed in a color capable of providing a high contrast to the white background, for example, in black. Consequently, others in the surroundings can also easily visually recognize that the transmission section 10 is placed in the TRANSMISSION PROHIBITION mode.

Particularly, since the second communication mode display section 2b is placed on the rear of the mobile telephone 1, when the user, etc., performs some operation while seeing the display section 3 placed on the front of the mobile telephone 1 (see FIG. 1 (b)), others in the surroundings can see the second communication mode display section 2b. Thus, others in the surroundings can be informed that the mobile telephone 1 is placed in the TRANSMISSION PROHIBITION mode without the user, etc., being aware of it.

When the mobile telephone 1 enters the TRANSMISSION PROHIBITION mode, a message of COMMUNICATIONS PROHIBITED or the like similar to the message displayed on the second communication mode display section 2b is displayed for the user, etc., in a part of the display section 3 under the control of the central control section 11, as described previously.

Next, the operation of the mobile telephone 1 will be discussed with reference to a flowchart of FIG. 3.

When amainpower switch (not shown) of themobile telephone 1 is turned on, the mobile telephone 1 starts to operate as a power supply voltage is supplied from the power supply section 14.

At step S100, whether or not a TRANSMISSION PROHIBITION command is given by the user, etc., is checked. If no TRANSMISSION PROHIBITION command is given (NO at step S100), the normal operation mode is set at step S102 and step S100 is repeated. That is, if no TRANSMISSION PROHIBITION command is given by the user, etc., the normal operation mode is set, enabling the user, etc., to use all functions of the mobile telephone 1.

On the other hand, if the user, etc., operates the predetermined operation button key of the input section 5 for entering a TRANSMISSION PROHIBITION command at step S100, control goes to step S104 and the transmission section 10 is set to the TRANSMISSION PROHIBITION mode. That is, if the user, etc., operates the predetermined operation button key of the input section 5 (for example, PROHIBIT operation button switch in FIG. 1 (b)) for entering a TRANSMISSION PROHIBITION command in a location where communication restriction is imposed, such as an airplane, a hospital, or a railroad vehicle, the transmission section 10 is set to the TRANSMISSION PROHIBITION mode at step S104.

Further, at step S106, the first communication mode display section 2a and the second communication mode display section 2b are turned on, displaying the fact that the TRANSMISSION PROHIBITION mode is entered.

Next, at step 5108, whether or not the user, etc., selects any function from among the functions of the mobile telephone 1 is checked. If no function is selected (NO at step S108), control goes to step S120 and whether or not the user, etc., enters a TRANSMISSION PROHIBITION RELEASE command is checked. If no TRANSMISSION PROHIBITION RELEASE command is entered, the process starting at step S100 is repeated.

If the user, etc., selects any function at step S108 (YES), control goes to step S110 andwhether or not the selected function is COMMUNICATION FUNCTION is checked. If any other function than COMMUNICATION FUNCTION is selected, control goes to step S112 and the selected function is executed. Then, if it is determined at step S120 that the user, etc., enters no TRANSMISSION PROHIBITION RELEASE command, the process starting at step S100 is repeated.

If COMMUNICATION FUNCTION is selected at step S110 (YES) , control goes to step S114 and the display section 3 displays the fact that the TRANSMISSION PROHIBITION mode is entered. Then, control goes to step S116.

At step S116, whether or not the user, etc., enters a preset command in response to displaying the TRANSMISSION PROHIBITION mode on the display section 3 is determined. If no preset command is entered (NO at step S116), COMMUNICATION FUNCTION is skipped and control goes to step S120. If it is determined at step S120 that the user, etc., enters no TRANSMISSION PROHIBITION RELEASE command, the process starting at step S100 is repeated. The COMMUNICATION FUNCTION mentioned here refers to a function involving output of a communication radio wave at least for executing the function.

If a preset command is entered at step S116, control goes to step S118 and the preset contents specified by the user, etc., are stored in the storage section 13 as preset data and then control goes to step S120. If it is determined at step s120 that the user, etc., enters no TRANSMISSION PROHIBITION RELEASE command, the process starting at step S100 is repeated.

The preset mentioned above is a function of presetting the contents for conducting communications after the mobile telephone 1 is set to the TRANSMISSION PROHIBITION RELEASE mode although the mobile telephone 1 is set to the TRANSMISSION PROHIBITION mode at present. If the user operates a predetermined operation button switch shown in FIG. 1 (b) (for example, PRESET operation button switch) and then prepares document data for mail transmission and sets the mail address of the receiving party and again operates the PRESET operation button switch, the preset data is stored in the storage section 13.

It is possible to preset not only the mail transmission, but also the mail address of a mail originating party for mail reception therefrom and the called telephone number for phone conversation.

If any other function than COMMUNICATION FUNCTION is preset in addition to presetting COMMUNICATION FUNCTION of mail transmission, mail reception, phone conversation, etc., the preset function other than COMMUNICATION FUNCTION can be executed after the mobile telephone 1 is set to the TRANSMISSION PROHIBITION RELEASE mode.

If it is determined at step s120 that the user, etc., enters a TRANSMISSION PROHIBITION RELEASE command, control goes to step S122 and the transmission section 10 placed in the TRANSMISSION PROHIBITION mode is restored to the transmission enable mode. Then, at step S124, the first and second communication mode display sections 2a and 2b are turned off and the display indicating the TRANSMISSION PROHIBITION mode on the display section 3 is turned off. Then, control goes to step S126.

That is, when the TRANSMISSION PROHIBITION mode is entered, if the user, etc. , operates the PROHIBIT operation button switch, a TRANSMISSION PROHIBITION RELEASE command can be given and the transmission section 10 placed in the TRANSMISSION PROHIBITION mode is restored to the transmission enable mode in response to the TRANSMISSION PROHIBITION RELEASE command and then the first and second communicationmode display sections 2a and 2b are turned off and the display indicating the TRANSMISSION PROHIBITION mode on the display section 3 is turned off. Accordingly, when the user exits from the location where communication restriction is imposed, it is made possible for the user, etc., to set the mobile telephone 1 to the normal operation mode enabling the user, etc., to use all functions of the mobile telephone 1.

Next, at step S126, whether or not preset data is stored in the storage section 13 is checked. If no preset data is stored, the process starting at step S100 is repeated. Ifpreset data is stored, control goes to step S128 and processing responsive to the preset data is performed and then the process starting at step S100 is repeated.

Thus, according to the embodiment, the functionof setting the TRANSMISSION PROHIBITION mode is provided, so that communication radio waves can be reliably prevented from being output in the location where communication restriction is imposed, such as an airplane, a hospital, or a railroad vehicle.

Themobile telephone 1 makes it possible not only toprevent communication radio waves from being output, but also for the user, etc., to use any other function than COMMUNICATION FUNCTION while COMMUNICATION FUNCTION is stopped, so that the convenience of the user, etc., can be improved.

Further, the preset mode is provided in which preset data desired by the user, etc., is stored while the TRANSMISSION PROHIBITION mode is set and processing responsive to the preset data is performed after the TRANSMISSION PROHIBITION mode is released, so that the convenience of the user, etc., can be improved.

Further, the fact that the mobile telephone 1 is placed in the TRANSMISSION PROHIBITION mode is displayed not only on the display section 3, but also on the first and second communication mode display sections 2a and 2b, so that not only the user, etc., but also others in the surroundings can be informed of the fact. Thus, when the user, etc., operates the mobile telephone 1 using any other function than COMMUNICATION FUNCTION in the location where communication restriction is imposed, others in the surroundings can recognize that no radio wave is output owing to the display of the first or second communication mode display sections 2a or 2b, and the user, etc., and others in the surroundings can check safety.

In the described embodiment, the first communicationmode display section 2a and the second communication mode display section 2b are provided, but at least either of the communication mode display section may be provided. The first, second communication mode display sections 2a, 2b may be placed in any other portion than shown in FIG. 1 (a), (c) or either of the first and second communication mode display sections 2a and 2b may be placed in any other portion than shown in FIG. 1 (a), (c) if the portion enables others in the surroundings to easily visually recognize the display.

The mobile telephone has been described as the embodiment of the invention, but the invention can also be applied to an information terminal having a communication function such as a PDA (personal digital assistant) and a mobile communication apparatus having a radio communication function such as a navigation system having portability.

The display method and the display contents of the first and second communication mode display sections 2a and 2b are options that can be appropriately set in response to the design specifications, etc., and are contained in the invention.

As described above, the mobile communication apparatus of the invention includes the transmission prohibition section for prohibiting transmitting a communication radio wave and the control section for permitting execution of any other function than the communication function when the transmission prohibition section prohibits transmitting a communication radio wave. If the mobile communication apparatus is set to the transmission prohibition mode so that a communication radio wave is not transmitted, the mobile communication apparatus enables the user, etc., to use any other function than the communication function transmitting a communication radio wave, so that the convenience of the user, etc., can be improved.

## Claims

1. A mobile communication apparatus (1) comprising:
control section (11) for performing a function in response to a command of a user;
radio communication section (10) for conducting radio communications by transmitting a radio wave; and
transmission prohibition section (12) for prohibiting the radio communication section from transmitting a radio wave, **characterised in that**:
the control section is arranged to permit to execute a function when the transmission prohibition section (12) prohibits the radio communication section (10) from transmitting a radio wave;
said control section (11) has storage section for storing the execution result of operation executed while the transmission prohibition section prohibits the radio communication section from transmitting a radio wave, and
the radio communication section is arranged, after the transmission prohibition section allows the radio communication section to transmit a radio wave, to transmit radio wave based on the execution result stored in the storage section.

2. The mobile communication apparatus as claimed in claim 1, further comprising:
display section (3) arranged such that, when transmission of a communication radio wave is prohibited, it displays the fact the transmission of a communication radio wave is prohibited for the outside.

3. A mobile communication method comprising the steps of:
controlling for performing a function in response to a command of a user;
radio communicating for conducting radio communications by transmitting a radio wave; and
transmission prohibiting for prohibiting the radio communicating from transmitting a radio wave, **characterised in that**:
when the transmission prohibiting step prohibits the radio communicating step from transmitting a radio wave, execution of a function by the controlling step is permitted;
the controlling step has storage step for storing the execution result of operation executed while the transmission prohibiting step prohibits the radio communicating step from transmitting a radio wave, and
after the transmission prohibiting step allows the radio communicating step to transmit a radio wave, the radio communicating step transmits a radio wave based on the execution result stored in the storage step.

4. The mobile communication method as claimed in claim 3, further comprising a displaying step, when transmission of a communication radio wave is prohibited, for displaying the fact that transmission of a communication radio wave if prohibited for the outside.

## Patentansprüche

1. Mobile Kommunikationsvorrichtung (1), die umfasst:
einen Steuerabschnitt (11), der als Reaktion auf einen Befehl eines Benutzers eine Funktion ausführt;
einen Funk-Kommunikationsabschnitt (10) zum Durchführen von Funkkommunikationen durch Senden einer Funkwelle, und
einen Sendeverbotsabschnitt (12), der dem Funk-Kommunikationsabschnitt verbietet, eine Funkwelle zu senden, **dadurch gekennzeichnet, dass**
der Steuerabschnitt eingerichtet ist, das Ausführen einer Funktion zu erlauben, wenn der Sendeverbotsabschnitt (12) dem Funk-Kommunikationsabschnitt (10) verbietet, eine Funkwelle zu senden;
der Steuerabschnitt (11) einen Speicherabschnitt besitzt, der das Ausführungsergebnis einer Operation speichert, die ausgeführt wird, während der Sendeverbotsabschnitt dem Funk-Kommunikationsabschnitt verbietet, eine Funkwelle zu senden, und
der Funk-Kommunikationsabschnitt eingerichtet ist, nachdem der Sendeverbotsabschnitt dem Funk-Kommunikationsabschnitt eine Funkwelle zu senden erlaubt, eine Funkwelle basierend auf dem in dem Speicherabschnitt gespeicherten Ausführungsergebnis zu senden.

2. Mobile Kommunikationsvorrichtung nach Anspruch 1, die weiter umfasst:
einen Anzeigeabschnitt (3), der so angeordnet ist, dass er, wenn das Senden einer Kommunikations-Funkwelle verboten ist, für die Umgebung die Tatsache anzeigt, dass das Senden einer Kommunikations-Funkwelle verboten ist

3. Mobilkommunikationsverfahren, das die folgenden Schritte umfasst
Steuern zum Durchführen einer Funktion als Reaktion auf einen Befehl eines Benutzers;
Funkkommunizieren zum Durchführen von Funk-Kommunikationen durch Senden einer Funkwelle, und
Sendenverbieten, um der Funk-Kommunikation zu verbieten, eine Funkwelle zu senden, **dadurch gekennzeichnet, dass**:
wenn der Senden-Verbieten-Schritt dem Funk-Kommunikationsschritt verbietet, eine Funkwelle zu senden, das Ausführen einer Funktion durch den Steuerungsschritt erlaubt wird;
der Steuerungsschritt einen Schritt hat, um das Ausführungsergebnis einer Operation zu speichern, die ausgeführt wird, während der Senden-Verbieten-Schritt dem Funk-Kommunikationsschritt eine Funkwelle zu senden verbietet, und
nachdem der Senden-Verbieten-Schritt dem Funk-Kommunikationsschritt eine Funkwelle zu senden erlaubt, der Funk-Kommunikationsschritt eine Funkwelle basierend auf dem in dem Speicherungsschritt gespeicherten Ausführungsergebnis sendet

4. Mobitkommunikationsverfahren nach Anspruch 3, das des Weiteren einen Anzeigeschritt umfasst, der, wenn das Senden einer Kommunikations-Funkwelle verboten ist, für die Umgebung die Tatsache anzeigt, dass das Senden einer Kommunikations-Funkwelle verboten ist

## Revendications

1. Appareil (1) de communication mobile comprenant :
une section (11) de commande destinée à assurer une fonction en réponse à une instruction d'un utilisateur ;
une section (10) de communication radio destinée à effectuer des communications radio pas émission d'une onde radio ; et
une section (12) d'interdiction d'émission destinée à interdire à la section de communication radio d'émettre une onde radio, **caractérisé :**
**en ce que** la section de commande est agencée pour permettre d'exécuter une fonction lorsque la section (12) d'interdiction d'émission interdit à la section (10) de communication radio d'émettre une onde radio ;
**en ce que** ladite section (11) de commande comporte une section de mémorisation destinée à mémoriser le résultat d'exécution d'une opération exécutée pendant que la section d'interdiction d'émission interdit à la section de communication radio d'émettre une onde radio ; et
**en ce que** la section de communication radio est agencée pour, après que la section d'interdiction d'émission a autorisé la section de communication radio à émettre une onde radio, émettre une onde radio en se basant sur le résultat d'exécution mémorisé dans la section de mémorisation.

2. Appareil de communication mobile tel que revendiqué dans la revendication 1, comprenant en outre :
une section (3) d'affichage agencée pour, lorsque l'émission d'une onde radio de communication est interdite, afficher, pour l'extérieur, le fait que l'émission d'une onde radio de communication est interdite.

3. Procédé de communication mobile comprenant les étapes :
de commande d'exécution d'une fonction en réponse à une instruction d'un utilisateur ;
de communication radio pour effectuer des communications radio en émettant une onde radio ; et
d'interdiction d'émission pour interdire à la communication radio d'émettre une onde radio, **caractérisé :**
**en ce que**, lorsque l'étape d'interdiction d'émission interdit à l'étape de communication radio d'émettre une onde radio, l'exécution d'une fonction par l'étape de commande est autorisée ;
**en ce que** l'étape de commande comporte une étape de mémorisation pour mémoriser le résultat d'exécution d'une opération exécutée pendant que l'étape d'interdiction d'émission interdit à l'étape de communication radio d'émettre une onde radio ; et
**en ce que**, après que l'étape d'interdiction d'émission a autorisé l'étape de communication radio à émettre une onde radio, l'étape de communication radio émet une onde radio en se basant sur le résultat d'exécution mémorisé à l'étape de mémorisation.

4. Procédé de communication mobile tel que revendiqué dans la revendication 3, comprenant en outre une étape d'affichage pour, lorsque l'émission d'une onde radio de communication est interdite, afficher, pour l'extérieur, le fait que l'émission d'une onde radio de communication est interdite.
